# EUROPEAN PATENT SPECIFICATION

(11) **EP 3 561 974 B1**
(45) Date of publication and mention of the grant of the patent: **25.08.2021**
(21) Application number: 19170462.6
(22) Date of filing: 23.04.2019
(51) Int. Cl.: H02B 1/01

(54) **A FRAME SYSTEM OF AN ELECTRIC SWITCHBOARD**
RAHMENSYSTEM EINER ELEKTRISCHEN SCHALTTAFEL
SYSTÈME DE CADRE D'UN TABLEAU DE DISTRIBUTION ÉLECTRIQUE

(30) Priority: 24.04.2018 FI 20185386
(43) Date of publication of application: 30.10.2019
(73) Proprietor: E Avenue Oy, 70420 Kuopio (FI)
(72) Inventor: JORMANAINEN, Martti, 80100 Liperi (FI)
(74) Representative: Kespat Oy

(56) References cited:
- DE-U1- 29 515 219
- FR-A1- 2 937 113
- US-A- 4 421 365
- US-A- 4 656 801

## Description

The object of the invention is an electric switchboard frame system, which includes
- a plinth system for the assembly of a plinth element of a selected size from sheet metal structures
- vertical structure elements, such as vertical profiles forming a basic attachment structure for components, the lower end of each profile being mounted in the plinth element
- roof structure support elements mounted on the upper end of the vertical structure elements and
- a roof structure supported by said vertical structure elements and support elements and
- cladding elements forming a housing structure, the frame system being further defined by the appended claims.

The electric switchboard is the end product subsequent to the equipping of the electric switchboard frame structure. Equipping is the instalment of electrical components, cables and control logic in the frame structure. The frame structure can be adapted to a great number of diverse objects. There are countless different electric switchboards, for the assembly of which, however, some kind of structured system is used by means of which the number of frame components is limited.

The practical purpose of the electric switchboard is to resolve how the frame structure is to be equipped and into which sealing class the casing structure to be placed on the frame is to be sealed. However, all electric switchboards that can be built for different demands are different, are of different sizes and equipped with different components according to their practical requirements.

The problems to be solved with the features of the structure:
Known modular electric switchboard systems contain an abundance of varying parts so that the number of tags to be prepared and stored becomes very large.

In known modular electric switchboard systems with a modular division of the plinth, a specific middle plate and end plates are used separately on both sides.

Of the countless typical fittings, one could mention a standard DIN rail for the attachment of components, busbars with their brackets, electric switchboard components, mounting plates and clamps for wiring.

Finnish patent FI 120121B describes an electric switchboard frame structure manufactured from sheet metal, said structure being formed from cellular elements. The most important parts are the modular plinth structure and the middle frame plates and profiles attached to the plinth structure, a plate and door cladding being attached to the profiles. The articles are manufactured from sheet metal by cutting, joining and moulding. The sheet metal plates are often also called sheets.

Utility model FI8921 describes a solution that improves the division of space with a pivotable vertical profile.

Per se, different storage cabinet structures are known. The publication US 4,421,365 discloses a heavy frame system, which has support wheels in order to move the cabinet system on rails. The frame system comprises transverse and longitudinal beams attached to one another. These are manufactured from structural steel, in particular from steel profiles, as both are subjected to point loads. The longitudinal beams (in the depth direction) are profile pipes and flanges are welded to their ends. The strength of the profile pipe must be significantly high in order to bear the point load engendered by the axes. The transverse beam also has to withstand a significant point load, as it is possible to step on the same. Likewise, the bottom flanges of the longitudinal and transverse beams are at a distance from the base structure nor do they bear a load. US4656801 A further discloses a three way joint for a frame structure comprising at the corner junction a location piece welded to one of the plinth elements and uprights connecting to the side of the plinth.

Although we have come a long way with the preceding modular solutions in the pursuit of optimally sized electric switchboards, the number of elements of the frame system has grown large nor is an optimal division of space always achieved, but rather one can end up occupying an entire adjacent section as the result of a small additional space.

The purpose of this invention is to further improve the mouldability of an electric switchboard system constructed from sheet metal in an invariably optimal manner while nevertheless using a minimum amount of frame components.

The essential purpose of this invention is achieved with the features according to claim 1. By means of the invention the plinth element can even be assembled using only two different profiles manufactured from sheet metal, namely a front/back plate profile and an end/middle profile. It is thus possible to use only one profile at the front and at the back. The latter have different lengths with a constant distribution such as e.g. 300, 450, 600, 750, 900, 1050 and 1200 mm. The standard measurements of the end/middle profile are, for example, 500, 750 and 1000 mm. It is completely clear that a countless number of different-sized plinths, as well as electric switchboards on top of these plinths, can be assembled from these 10 different profiles.

In the system according to the invention, the front and back plate of the plinth are advantageously joined to become one element so that the number of various elements is halved for this element. Likewise, the end and middle profiles are realized with one profile in each modular size.

By means of the two-part nature of the frame profile of the structure, the profiles can be moved in the depth direction and pivoted 180° around their longitudinal and transverse axes in accordance with the depth adjustment requirements of any depth situation.

By virtue of the modular plinth elements 1 and 2 and the vertical profiles, the electric switchboard frame can be constructed to be symmetrical or asymmetrical in the longitudinal direction of the frame, to be modular in the longitudinal, depth or height direction of the frame and to be adjustable between the spaces in the depth direction of the frame structure.

The longitudinally oriented and vertically oriented current busbars of the electric switchboard can be advantageously constructed with the same or different measurements anywhere in the spaces to be constructed in the electric switchboard frame.

The plinth can be constructed so as to be rigid or so as to dampen vibrations or shocks and is either way comprised by both intended uses. The stiffness of the plinth and entire electric switchboard is achieved by the interaction of the plinth and the structure above it.

By virtue of the vertical profiles and their support system according to the electric switchboard frame system, the depth of one or several spaces can be adjusted in the depth direction. According to a certain electric switchboard frame system, the functional vertical profile is formed by two L-profiles together, wherein the latter can be positioned in both directions against an L-support plate for the adjustment of the boundaries between the different spaces of the frame in the depth direction.

A modularly perforated profile bar (vertical profile) is used for the attachment of current busbars, electric switchboard components, mounting plates and wiring and for the formation of the vertical structure of the frame. In the switchboard frame structure, one or two halves of the profile can be used when carrying out a depth adjustment of the structure.

It is essential that the profiles have the following functions, which are realized by their structure and form. The plinth profiles are advantageously made of sheet metal with a thickness of 2 - 2.5 mm. All functions are also linked to the thickness of the plate. In practice, the thickness of the plate cannot vary greatly anyway, because various functions can be impossible to realize with other measurements.
1. The end/middle and front/back profiles have a supporting function - they have a sufficient bearing surface against the basic structure > the foot elements being the solution - the foot elements must possess a width against the basic structure, wherein the width of the bent foot segment is 35 - 45 mm.
   The width of the end/middle profile (s =2 mm) is 35 % (30 - 45%) of its height or the height of the plinth. The material width is 2.5 mm.
   The foot of the front/back profile (s = 2.5 mm) is 40 % (35 - 45%) of the height of the plinth. The material width is 2 mm.
2. The end/middle and front/back profiles have a reciprocal function for the realization of a stiff skeleton structure > the solution being
   - a reinforcing profile form (35 - 45 mm may be sufficient for this purpose as well)
   - the front/back profile has, in addition to the bent foot segment, an upper bent segment as a reinforcement
   - the end/middle profile has a U-shaped profile open to the side
   - the plate thickness is 2 mm or 2.5 mm
   - selected indentations in the ends of the profiles in order to facilitate their being joined together
   more precisely: the bottom flange of the end/middle profile is shortened in accordance with the width of the other profile The bent foot segment (the outermost bent segment) of the front/back profile is cut to half the size of the second profile, leaving behind merely the bottom flange or alternatively a formed vertical notch for the end flange of the first profile
3. The end/middle and front/back profiles have a reciprocal attachment function for the assembly of the plinth > the solution being
   a. an end plane in the end/middle profile, the end plane having a series of attachment holes. A width of 35 mm is sufficient in order to attach two front/back profiles to the same end
   b. the front/back profile has series of edge holes adapted for the series of attachment holes of the end plane
   c. an alternative series of attachment holes for two attachment positions, when the entire width of the end profile is attached to the front/back profile
4. The profiles have bearing functions for the support and attachment of the vertical profiles > solution: a perforated attachment surface in the upper surface and partly in the ends of the end/middle profile. Support occurs in the end/middle profiles. Mainly in the series of holes of the upper flange (35 mm), although there are also attachment holes on the side of the midsection.
5. Door sealing element of the front/back profile > solution: upper reinforcement (bent segment 10%) forms a seal lip support. The bent segment of the seal lip simultaneously reinforces the front/back profile here.

In the following, the invention is illustrated by means of the attached examples and drawings. The drawings show a few examples of an electric switchboard in accordance with an electric switchboard system according to the invention and the components of the system in detail.
Figure 1 shows an electric switchboard frame assembled by means of the system.
Figure 2 shows a plinth assembly of the electric switchboard shown in Figure 1.
Figures 3a - c show an edge/intermediate profile of the plinth
Figures 4a - e show a front/back plate profile of the plinth
Figure 4f shows a variant of the front/back plate profile
Figures 5a - d show a partially sectional view of the attachment of the edge/intermediate profiles to one another
Figure 6 shows an electric switchboard from the front
Figures 7a - c show a vertical profile according to the invention
Figure 8 shows a sectional view of the electric switchboard shown in Figure 6 at the point A-A

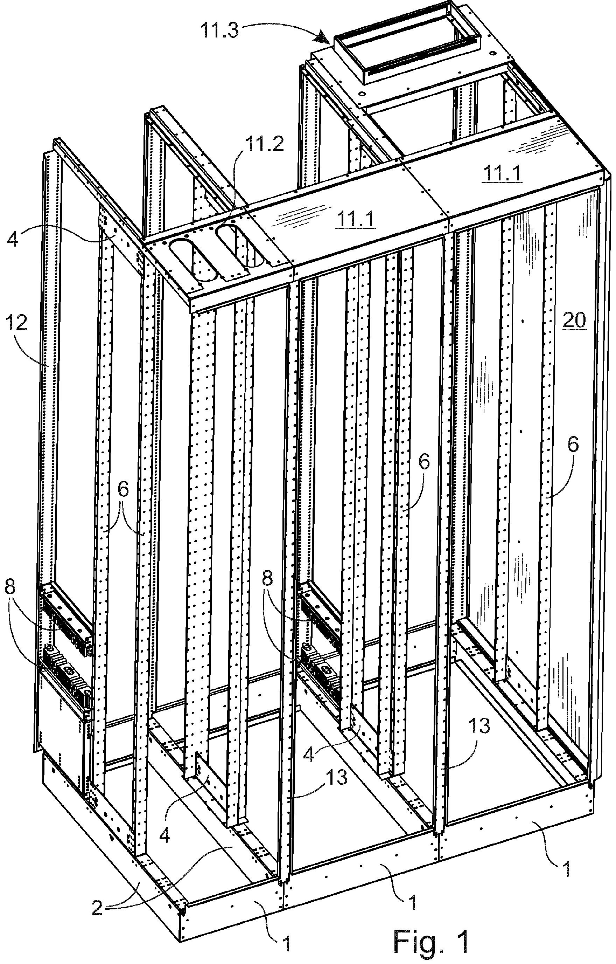

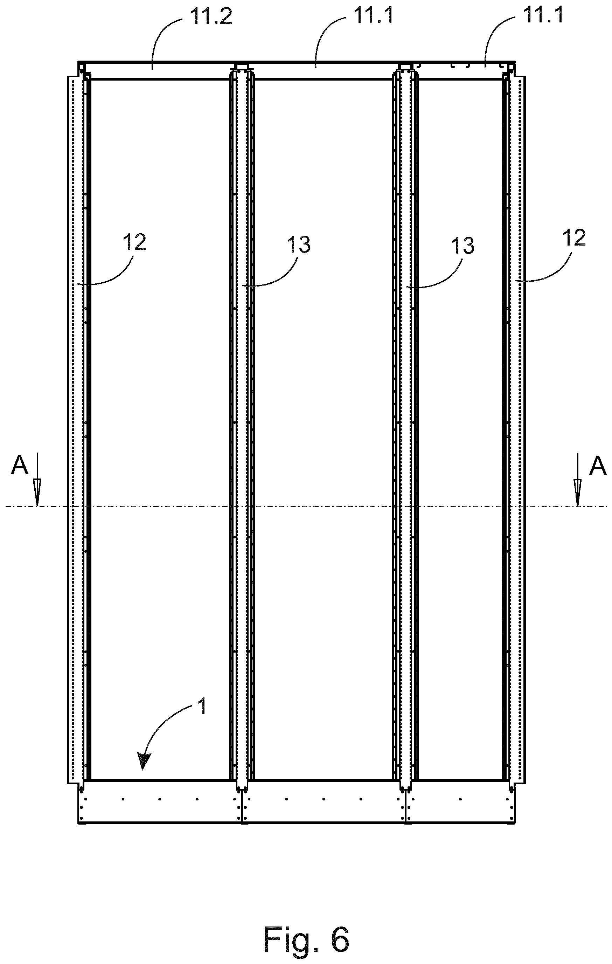

The electric switchboard is always constructed according to requirements in accordance with the planned equipment and requirements. The electric switchboard frame of Figure 1 is shown in an almost completed state and is assembled from the plinth 1, 2 and different vertical profiles 6, 12, 13, upper profiles 14, roof elements 11.1, 11.2, 11.3 and wall elements 20. The profiles 12 and 13 mounted in the corners and on the outer edge are conventional vertical profiles. Together with the support plates 4, the vertical profiles 6 arranged in the middle have structural features and special attributes described further below (Figures 6 - 8).

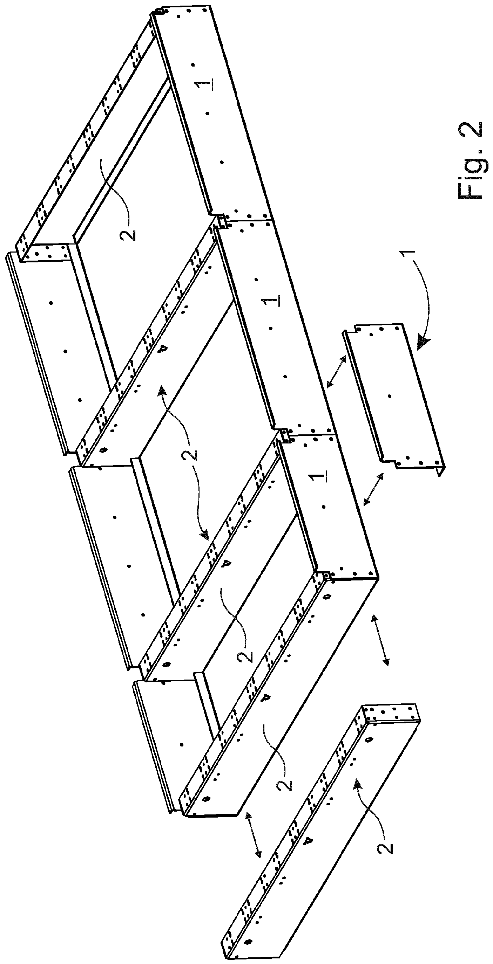

The plinth is assembled from front/back profiles 1 and end/middle profiles 2. According to Figure 2, the plinth is assembled in a simple fashion from merely two different profiles, namely a front/back profile 1 and an end/middle profile 2. In the plinth of Figure 2, the front/back profile has two modular sizes. The features of these profiles by means of which the front/back profile 1 can be attached to the end/middle profile 2 at two depths, which renders possible both end and extension arrangements, is described further below.

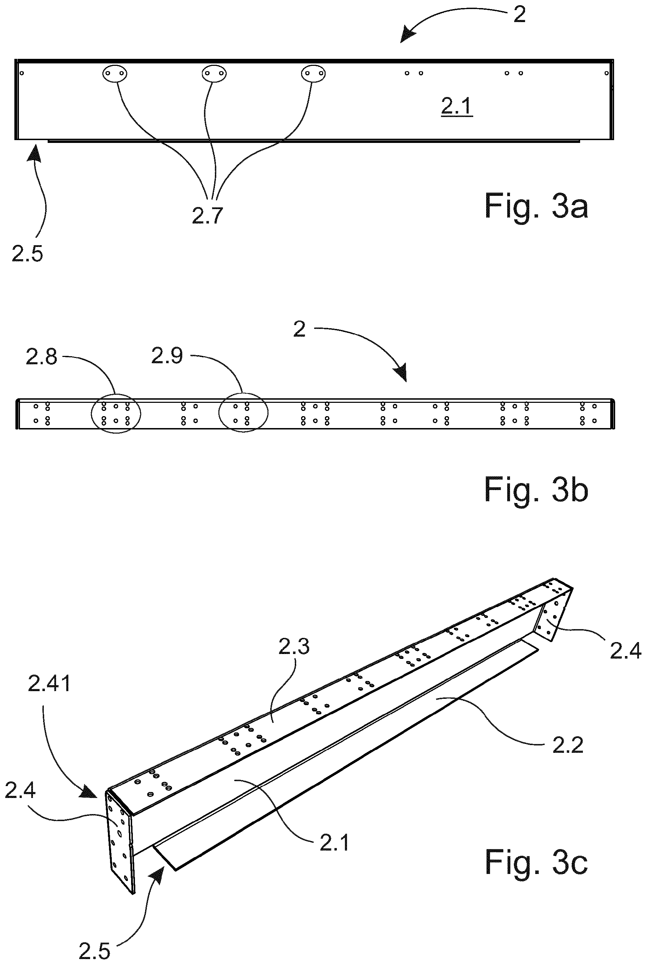

In accordance with Figures 3a - c, the end/middle profile 2 comprises a bent structure, advantageously of 100 mm high and 2mm thick sheet metal, in which the U-shaped profile contour open to the side is formed from the midsection 2.1, the lower flange 2.2 and the upper flange 2.3. The extension of the midsection 2.1 is bent into an end flange 2.4.

The end flange 2.4 advantageously has two series of attachment holes 2.41, more precisely vertical rows of attachment holes as well as one central attachment hole. The upper flange has the attachment hole series 2.8 and 2.9, to which mainly the frame above it is attached.

The midsection 2.1 has an attachment hole series 2.7 e.g. for joining the ends of interrupted conveyance paths together. Of the utmost importance are the indentations 2.5 at both ends of the lower flange 2.2 by means of which it is possible to place the profiles 1 and 2 against one another at a 90° angle.

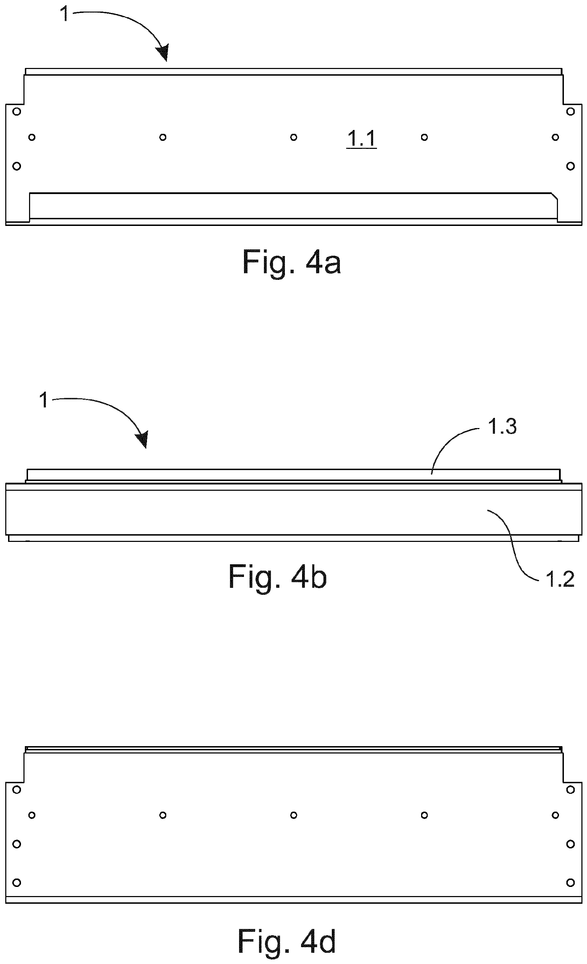

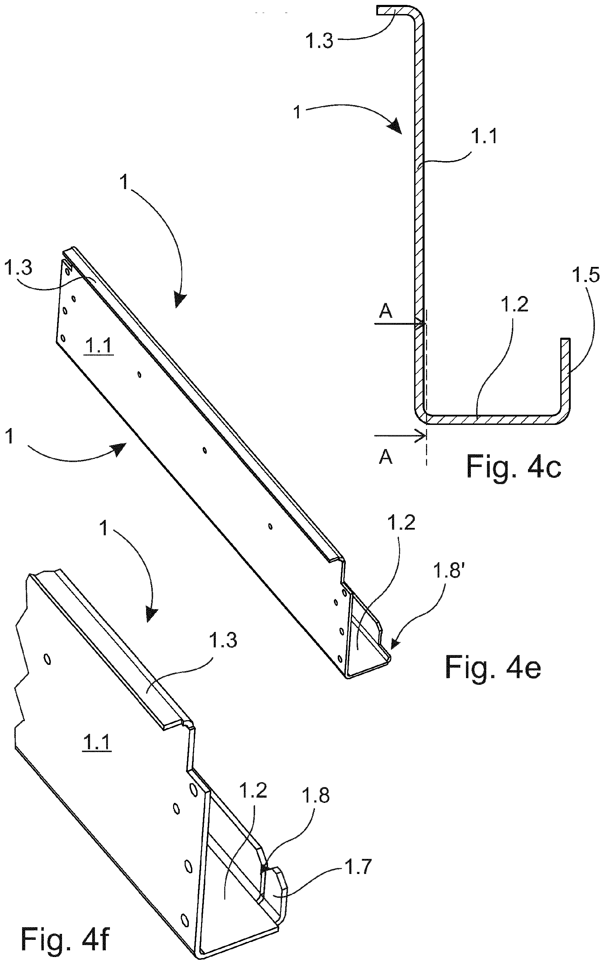

The front/back profile of Figures 4a - 4e is advantageously made of 2.5 mm thick sheet metal, because based on experience it is known that thinner sheet metal does not withstand the strain caused by rolling for transport purposes. The midsection 1.1 of the profile 1 forms the visible front and back wall. The foot element comprises a bottom flange 1.2 as well as a lower bent segment 1.5. The bottom flange 1.2 receives the point load occurring during transport. The upper edge of the profile has a reinforcing bent segment 1.3, which forms, when necessary, a sealing lip against the door, the bent segment of the upper element additionally being indispensable for reinforcing the profile.

Besides the vertically oriented series of holes in its ends, the profile 1 includes a horizontally oriented series of holes, into which attachments required by either a bottom floor plate or rear cladding are introduced.

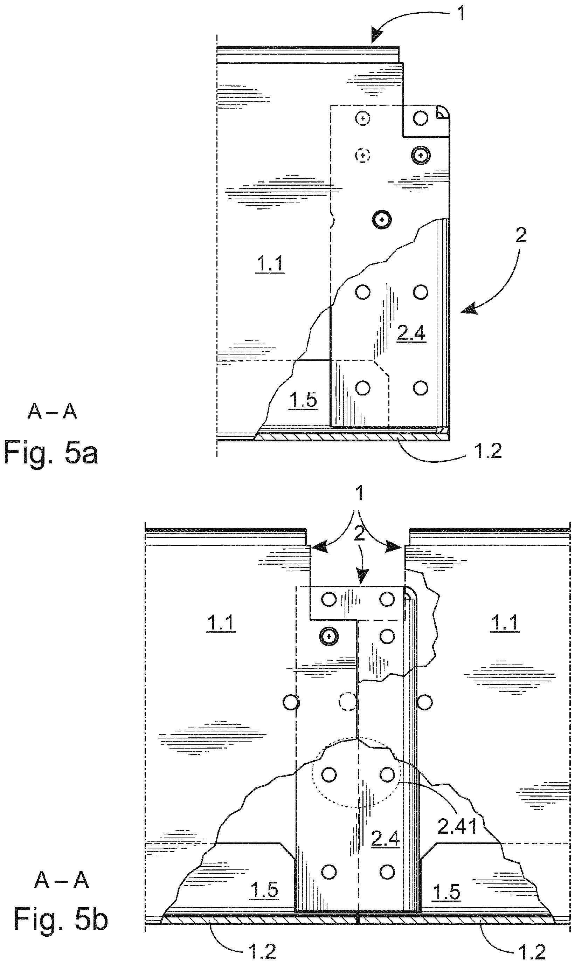

The section A-A is designated in Figure 4c for Figures 5a - d.

Figure 4f shows a variant in which the lower bent segment 1.5 is extended almost up to the end of the profile 11, while the selected position includes an interstice 1.8. By means of the interstice the profiles are easier to assemble, as the midsection 2.1 of the profile 2 fits into it and is already positioned at the right spot during the construction of the plinth.

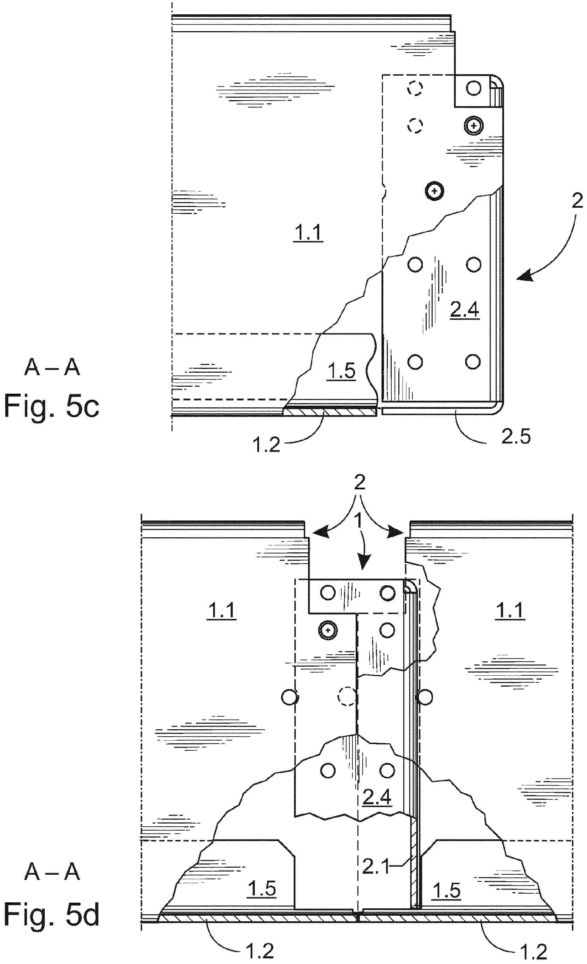

In all Figures 5a - d, the midsection 1.1 of the front/back profile 1 or surface plate visible to the outside is partially sectioned. In Figure 1a, the profile 2 is positioned in the front/back profile specifically as the end profile. According to Figure 5a, the lower flange 1.2 of the profile 1 fits right up to the end as a result of the indentation 2.5 (Figure 3c) in the end profile 2. Moreover, the lower flange 1.2 of the profile 1 fits under the midsection 2.1 of the other profile 2 (Figure 5d). Both lower flanges 1.2 and 2.2 are supported on the base structure, i.e. on the same plane.

In the other Figures 5b - d, the end/middle profile 2 acts specifically as an extension, i.e. the ends of the two profiles 1 are attached to the end 2.4 of the profile 2. According to Figure 5b, the reinforcing bent segment 1.5 of the front/back profile 1 extends precisely up against the midsection 2.1 of the profile 2 (on the right in the figure). In Figure 5c, in addition to the partially sectional view of the surface plate or midsection 1.1, the foot element or lower flange 1.2 and reinforcing bent segment 1.5 are sectioned in such a way that the whole projection of the profile 2 is visible.

In Figure 5d, in addition to the partially sectional view of the surface plate of the profile 1, the bottom part of the end 2.4 of the profile 2 is sectioned so that the arrangement of the lower flange and reinforcing bent segment 1.5 of the profile 1 against the midsection 2.1 of the profile 2 is visible on the right.

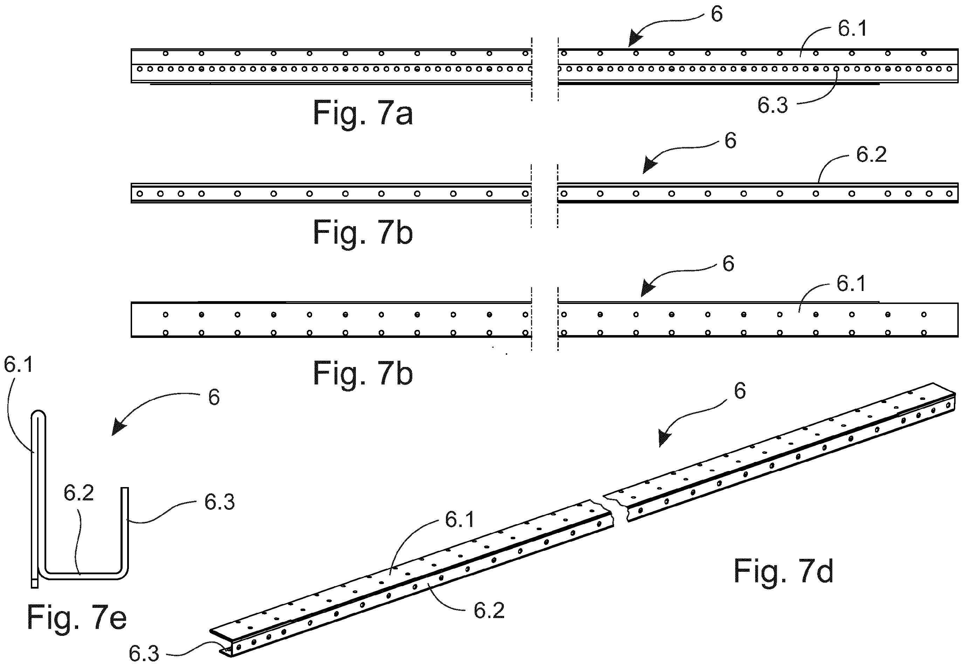

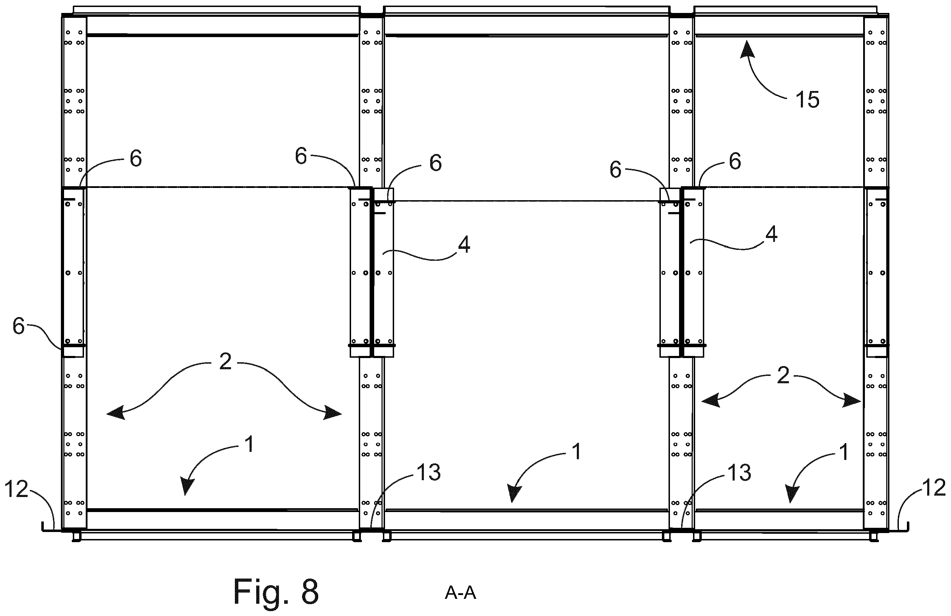

Figure 6 shows a plain frame structure, in which a roof structure supported by vertical profiles is on a plinth. Figure 8 is a sectional view of the point A - A. The vertical profiles include corner profiles 12, front/back vertical profiles 12 and vertical support profiles 6, the structure of which is shown in detail in Figures 7a - 7d. Doors and door partitioning profiles (not shown) are connected to the vertical profiles 13 and corner profiles.

The vertical support profile 6 comprises a double midsection 6.1, a flange 6.2 and a reinforcing bent segment 6.3 (Figure 7e). All planes 6.1, 6.2 and 6.3 have series of holes for the attachment of support as well as for equipment attachments. The vertical support profiles 6 are advantageously bent into their shapes from sheet metal with a thickness of 1.5 mm. The attachment of the vertical support profile 6 to the L-support plate 4 is clearly visible in Figure 1. In the middle, two opposite L-support plates 4 (s=1.25 mm) are used, the vertically oriented midsections of the support plates facing each other and the horizontally oriented flanges of each being attached to a middle profile 2 of the plinth. Only one L-support plate 4 is used at the ends, the L-support plate 4 being attached to the end profile 2 and positioned at the outer edge of the latter. Its flange thus includes series of attachment holes adapted for two positions, by means of which holes the L-support plate 4 is attached by screws to the upper flange 2.3 of the end/middle profile 2 in the selected position. The material width of the L-support plate is generally 1 - 2 mm, more advantageously 1.1 - 1.5 mm. Several intermediate supports are mounted in the vertical direction between each foremost and corresponding rearmost vertical support profile 6 so as to reinforce the profile structure (not shown).

The peculiarity of this support profile is the shifted arrangement shown in Figure 8, in which the vertical support profiles 6 that are further back in the middle plinth element are mounted slightly inwards into the midsection of the L-support plate 4, so that slightly more depth is obtained in the middle section further back than is the case in the adjacent sections. The 20 mm additional depth is needed here when support insulators 8 requiring this additional space are used for high-capacity bus bars. This required additional space can easily be taken from the middle section, as e.g. conductor space does not require a full modular depth. In the same manner, an additional depth can be obtained in a front section if necessary, should the electrical equipment to be installed require it. Naturally, even more additional depth can be obtained with this technique, as the attachment of the vertical support profile 6 to the L-support plate 4 can be realized in a depth position rendered possible by the formed series of holes. Frequently 20 mm is sufficient, so that the space saved is significant in comparison with a situation in which the middle section would be entirely lost.

The lower and upper middle supports 4 are thus adapted to receive the vertical support profile 6 in different depth positions.

The invention is suitable, e.g., for industrial cellular switchboard systems, which are designed in particular as main, distribution and process switchboards for industrial objects. The largest nominal voltage in such a system is 690 VAC and the largest nominal current 5000 A. The largest short-circuit current values are 100 kA (thermal) and 220 kA (dynamic). For the most part, equipment is installed in a rigid fashion, while a portion of the equipment can be mounted so as to be removable or pulled out. The industrial cellular switchboard system is composed of a hot-dip galvanized, self-supporting steel sheet structure, in which the frame of the system is assembled on top of the plinth structure from self-supporting frame elements, the material of which is a 1.6 mm thick, hot-dip galvanized steel profile. The modular structure renders possible a nearly unlimited number of different assemblies.

In a further embodiment, the cellular switchboard system is designed in particular as a main or distribution switchboard for real estate objects or as a sub-distribution switchboard for industrial objects. The largest nominal voltage is 690 VAC and the largest nominal current 3150 A. The largest short-circuit current values are 60 kA (thermal) and 132 kA (dynamic). In this structure, the frame of the cellular switchboard system is assembled on top of the plinth structure from self-supporting frame elements. The opening angle of the doors is 160°. This cellular switchboard system has a hot-dip galvanized, self-supporting steel sheet structure. The modular structure renders possible a nearly unlimited number of different assemblies. The field widths of the system are 300, 450, 600 and 750 mm. The frame heights of the system are 1680 and 1960 mm.

## Claims

1. Electric switchboard frame system, which includes
- a plinth system for the assembly of plinth elements (1, 2) of a selected size from sheet metal structures comprising flange elements (1.2, 1.3, 2.2, 2.3) fitted against a base structure in order to support the frame system from the base structure,
- vertical structure elements, wherein vertical profiles (6, 8, 12, 13) forming an attachment base structure for components are each mounted on the plinth elements (1, 2) by their lower ends,
- roof structure support elements mounted on the upper ends of the vertical profiles (6, 8, 12, 13) and
- a roof structure (11.1, 11.2, 11.3) supported by said vertical profiles (6, 8, 12, 13) and roof structure support elements
- cladding elements (20) attached to the rest of the structure and forming a housing structure together with the latter,
wherein the plinth system further includes
- a first profile (1) of a selected length forming the front and back profiles of the plinth, the first profile (1) having at its bottom a bent segment (1.2) extending inwards, which forms a first flange element against the base structure, and a reinforcing bent segment (1.3) in its upper portion,
- a depth-oriented, second profile (2) of a selected length forming at least the end and middle profiles of the plinth, wherein nearly the entire length of the second profile (2) comprises a U-profile (2.3, 2.1, 2.2) open to the side and end flanges (2.4), the second profile (2) including a flange (2.2) fitted against the base structure, an upper flange (2.3) and a midsection (2.1), **characterized in that**
- the upper flange (2.3) and midsection (2.1) of the second profile (2) extend over the entire length of the profile (2)
- the ends of the first and second profiles (1, 2) include indentations (2.5, 1.8) adapted to each other in order to fit the profiles (1,2) end to end on the same plane against the base structure,
- there are reciprocal series of attachment holes (2.41) in the ends of the first profile (1), more precisely in its vertical edges, and in each of the end plates (2.4) of the second profile (2) in order to attach these profiles (1, 2) to one another with screw attachments.

2. Electric switchboard frame system according to claim 1, **characterized in that** the first profile (1) includes a lower bent segment (1.5), which is an extension of the lower flange (1.2), and said indentations (2.5, 1.8) adapted to each other are formed in such a way that the lower bent segment (1.5) of the first profile (1) has a fissure (1.8) at its end in order to form the mounting space for the midsection (2.1) of the second profile (2) in its reciprocal attachment, and the U-bent segment of the second profile (2) does not extend in a continuous manner, i.e. the bottom flange (2.2) has an indentation (2.5) at both ends so that the lower flange (1.2) of the first profile (1) fits underneath said midsection (2.2).

3. Electric switchboard frame system according to claim 1 or 2, **characterized in that** the reinforcing bent segment (1.3) is formed for a sealed door.

4. Electric switchboard frame system according to any of claims 1 - 3, **characterized in that** each end flange (2.4) of the second profile (2) is formed from the extension of the midsection (2.1) by bending it inwards.

5. Electric switchboard frame system according to any of claims 1 - 4, **characterized in that** the material thickness of the first profile (1) or front/back profile is 1.5 - 3 mm, more advantageously approximately 2.5 mm.

6. Electric switchboard frame system according to any of claims 1 - 5, **characterized in that** the material thickness of the second profile (2) or end/middle profile is 1.5 - 3 mm, more advantageously approximately 2 mm.

7. Electric switchboard frame system according to any of claims 1 - 6, **characterized in that** the frame system includes a first selected number of first profiles (1) or front/back profiles of different lengths as a first modular series and correspondingly a second selected number of second profiles (2) or end/middle profiles of different lengths as a second modular series.

8. Electric switchboard frame system according to any of claims 1 - 7, **characterized in that** the frame system includes an L-support plate (4) that is attachable to the second profile (2) of the plinth and a vertical profile (6) and adapted as an element system in order to render possible the depth-oriented arrangement of the vertical support profile (6).

9. Electric switchboard frame system according to claim 8, **characterized in that** the system includes support insulators (8) of different lengths for busbars possessing different capacities.

10. Electric switchboard frame system according to any of claims 1 - 9, **characterized in that** said end flanges (2.4) include two alternative series of attachment holes for the attachment of the second profile (2) to the edge of the first profile (1) either as an end profile or as a middle profile so that the end plate (2.4) joins two adjacent first profiles (1) together.

## Patentansprüche

1. Rahmensystem einer elektrischen Schalttafel, bestehend aus
- einem Sockelsystem zum Zusammenbau der Sockelelemente (1, 2) mit einer ausgewählten Größe aus Blechkonstruktionen bestehend aus Flanschelementen (1.2, 1.3, 2.2, 2.3), die an einer Grundkonstruktion befestigt sind zur Stütze des Rahmensystems durch die Grundkonstruktion,
- vertikalen Konstruktionselementen, wobei jedes der als Befestigungsgrundkonstruktion für die Komponenten dienenden vertikalen Profile (6, 8, 12, 13) an ihren unteren Enden an den Sockelelementen (1, 2) befestigt sind,
- Deckenstützelementen, die an den oberen Enden der vertikalen Profile (6, 8, 12, 13) angebracht sind und
- einer Deckenkonstruktion (11.1, 11.2, 11.3), die von den genannten vertikalen Profilen (6, 8, 12, 13) und den Deckenstützelementen gestützt wird
- Verkleidungselementen (20), die an der restlichen Konstruktion befestigt sind und gemeinsam damit ein Gehäuse bilden,
wobei das Sockelsystem weiterhin besteht aus
- einem ersten Profil (1) mit einer ausgewählten Länge, das die Vorder- und Hinterprofile des Sockels bildet, das erste Profil (1) hat an seinem Boden einen nach innen gekrümmten Abschnitt (1.2), der das erste Flanschelement an der Grundkonstruktion bildet, und an seinem oberen Teil einen gekrümmten Verstärkungsabschnitt (1.3),
- einem in Tiefenrichtung verlaufenden zweiten Profil (2) mit einer ausgewählten Länge, das mindestens die End- und Mittelprofile des Sockels bildet, wobei fast die gesamte Länge des zweiten Profils (2) aus einem U-Profil (2.3, 2.1, 2.2) besteht, das zur Seite und den Endflanschen (2.4) hin geöffnet ist, das zweite Profil (2) umfasst einen Flansch (2.2), der an der Grundkonstruktion befestigt ist, einen oberen Flansch (2.3) und einen Mittelteil (2.1),
**dadurch gekennzeichnet, dass**
- der obere Flansch (2.3) und der Mittelteil (2.1) des zweiten Profils über die gesamte Länge des Profils (2) reichen
- die Enden des ersten und zweiten Profils (1, 2) Vertiefungen (2.5, 1.8) haben, die aneinander angepasst sind, um die Profile (1, 2) durchgängig auf gleicher Ebene an der Grundkonstruktion zu befestigen,
- an den Enden des ersten Profils (1), genauer gesagt an dessen vertikalen Kanten, und an jeder Endplatte (2.4) des zweiten Profils (2) Befestigungslöcher (2.41) wechselseitig angeordnet sind, um diese Profile (1, 2) durch Schraubenbefestigung miteinander zu verbinden.

2. Rahmensystem einer elektrischen Schalttafel nach Anspruch 1, **dadurch gekennzeichnet, dass** das erste Profil (1) einen unteren gekrümmten Abschnitt (1.5) umfasst, der eine Verlängerung des unteren Flansches (1.2) ist, und genannte Vertiefungen (2.5, 1.8) aneinander angepasst und so ausgebildet sind, dass der untere gekrümmte Abschnitt (1.5) des ersten Profils (1) am Ende einen Spalt (1.8) aufweist, um für den Einbau des Mittelteils (2.1) des zweiten Profils (2) an dem wechselseitig angeordneten Befestigungsteil Raum zu schaffen, und der U-gekrümmte Abschnitt des zweiten Profils (2) nicht durchgehend verlängert wird,
d. h. der Bodenflansch (2.2) hat eine Vertiefung (2.5) an beiden Enden, so dass der untere Flansch (1.2) des ersten Profils (1) unter den genannten Mittelteil (2.2) passt.

3. Rahmensystem einer elektrischen Schalttafel nach Anspruch 1 oder 2, **dadurch gekennzeichnet, dass** der gekrümmte Verstärkungsabschnitt (1.3) für eine abgedichtete Tür ausgebildet ist.

4. Rahmensystem einer elektrischen Schalttafel nach jedem der Ansprüche 1 - 3, **dadurch gekennzeichnet, dass** jeder Endflansch (2.4) des zweiten Profils (2) aus der Verlängerung des Mittelteils (2.1) gebildet wird, indem dieses nach innen gebogen wird.

5. Rahmensystem einer elektrischen Schalttafel nach jedem der Ansprüche 1 - 4, **dadurch gekennzeichnet, dass** die Materialstärke des ersten Profils (1) oder Vorder-/Hinterprofils 1,5 - 3 mm beträgt, vorzugsweise ca. 2,5 mm.

6. Rahmensystem einer elektrischen Schalttafel nach jedem der Ansprüche 1 - 5, **dadurch gekennzeichnet, dass** die Materialstärke des zweiten Profils (1) oder End-/Mittelprofils 1,5 - 3 mm beträgt, vorzugsweise ca. 2 mm.

7. Rahmensystem einer elektrischen Schalttafel nach jedem der Ansprüche 1 - 6, **dadurch gekennzeichnet, dass** das Rahmensystem eine ausgewählte Anzahl an unterschiedlich langen ersten Profilen (1) oder Vorder-/Hinterprofilen umfasst als erste modulare Serie und entsprechend eine ausgewählte Anzahl an unterschiedlich langen zweiten Profilen (2) oder End-/Mittelprofilen als zweite modulare Serie.

8. Rahmensystem einer elektrischen Schalttafel nach jedem der Ansprüche 1 - 7, **dadurch gekennzeichnet, dass** das Rahmensystem eine L-förmige Stützplatte (4) umfasst, die am zweiten Profil (2) des Sockels und einem vertikalen Profil (6) befestigt und als Elementsystem angepasst werden kann, um die Anordnung des vertikalen Stützprofils (6) in Tiefenrichtung zu ermöglichen.

9. Rahmensystem einer elektrischen Schalttafel nach Anspruch 8, **dadurch gekennzeichnet, dass** das System unterschiedlich lange Stützisolatoren (8) für Sammelschienen mit unterschiedlichen Kapazitäten umfasst.

10. Rahmensystem einer elektrischen Schalttafel nach jedem der Ansprüche 1 - 9, **dadurch gekennzeichnet, dass** genannte Endflansche (2.4) zwei alternative Serien von Befestigungslöchern zur Befestigung des zweiten Profils (2) an der Kante des ersten Profils (1) umfassen, entweder als Endprofil oder als Mittelprofil, so dass die Endplatte (2.4) zwei benachbarte erste Profile (1) miteinander verbindet.

## Revendications

1. Système de cadre d'un tableau de distribution électrique, lequel inclut
- un système de socle pour l'assemblage d'éléments de socle (1, 2) d'une taille choisie composé de structures en tôle comprenant des éléments de rebord (1.2, 1.3, 2.2, 2.3) placés contre une structure de base afin de soutenir le système de cadre à partir de la structure de base,
- des éléments de structure verticaux, dont des profils verticaux (6, 8, 12, 13), formant une structure de base de fixation pour que les composants soient fixés aux éléments de socle (1, 2) par leurs extrémités inférieures,
- des éléments de soutien de la structure supérieure fixés sur les extrémités supérieures des profils verticaux (6, 8, 12, 13) et
- une structure supérieure (11.1, 11.2, 11.3) soutenue par lesdits profils verticaux (6, 8, 12, 13) et des éléments de soutien de la structure supérieure
- des éléments de revêtement (20) attachés au reste de la structure et formant une structure de boîtier en combinaison avec les éléments précités,
où le système de socle inclut également
- un premier profil (1) d'une longueur choisie correspondant aux profils avant et arrière du socle, le premier profil (1) présentant dans sa partie inférieure un segment recourbé (1.2) se prolongeant vers l'intérieur, lequel forme un premier élément de rebord contre la structure de base, et un segment recourbé de renforcement (1.3) dans sa partie supérieure,
- un deuxième profil dans la profondeur (2) d'une longueur choisie correspondant au moins aux profils de fin et de milieu du socle, où presque toute la longueur du deuxième profil (2) se compose d'un profil en U (2.3, 2.1, 2.2) ouvert au niveau des rebords sur les côtés et aux extrémités (2.4), le deuxième profil (2) incluant un rebord (2.2) qui se place contre la structure de base, un rebord supérieur (2.3) et une plaque de milieu (2.1),
**caractérisé en ce que**
- le rebord supérieur (2.3) et la plaque du milieu (2.1) du deuxième profil se prolongent sur toute la longueur du profil (2)
- les extrémités des premier et deuxième profils (1, 2) incluent des indentations (2.5, 1.8) adaptées les unes aux autres afin que les profils (1, 2) s'emboîtent d'un bout à l'autre sur le même plan contre la structure de base,
- des séries réciproques de trous de fixation (2.41) se trouvent aux extrémités du premier profil (1), plus précisément dans ses plaques latérales verticales, et dans chacune des plaques d'extrémité (2.4) du deuxième profil (2) afin de fixer ces profils (1, 2) les uns aux autres grâce à de la visserie.

2. Système de cadre d'un tableau de distribution électrique conformément à la revendication 1, **caractérisé en ce que** le premier profil (1) inclut un segment inférieur recourbé (1.5), lequel est un prolongement du rebord inférieur (1.2), et lesdites indentations (2.5, 1.8) adaptées les unes aux autres sont formées de telle sorte que le segment inférieur recourbé (1.5) du premier profil (1) comporte une fissure (1.8) à son extrémité afin de former l'espace de fixation pour la plaque du milieu (2.1) du deuxième profil (2) lors de sa fixation réciproque, et le segment recourbé en forme de U du deuxième profil (2) ne se prolonge pas de manière continue,
c'est-à-dire que le rebord du bas (2.2) comporte une indentation (2.5) aux deux extrémités de sorte que le rebord inférieur (1.2) du premier profil (1) rentre sous ladite plaque du milieu (2.2).

3. Système de cadre d'un tableau de distribution électrique conformément à la revendication 1 ou 2, **caractérisé en ce que** le segment recourbé de renforcement (1.3) est formé pour une porte avec joint d'étanchéité.

4. Système de cadre d'un tableau de distribution électrique conformément à l'une quelconque des revendications 1 à 3, **caractérisé en ce que** chaque rebord d'extrémité (2.4) du deuxième profil (2) est formé par le prolongement de la plaque du milieu (2.1) qui est recourbé vers l'intérieur.

5. Système de cadre d'un tableau de distribution électrique conformément à l'une quelconque des revendications 1 à 4, **caractérisé en ce que** l'épaisseur du matériau du premier profil (1) ou du profil avant/arrière est comprise entre 1,5 et 3 mm, mais est plus avantageuse à environ 2,5 mm.

6. Système de cadre d'un tableau de distribution électrique conformément à l'une quelconque des revendications 1 à 5, **caractérisé en ce que** l'épaisseur du matériau du deuxième profil (2) ou du profil de fin/milieu est comprise entre 1,5 et 3 mm, mais est plus avantageuse à environ 2 mm.

7. Système de cadre d'un tableau de distribution électrique conformément à l'une quelconque des revendications 1 à 6, **caractérisé en ce que** le système de cadre inclut un premier nombre choisi de premiers profils (1) ou de profils avant/arrière de différentes longueurs en tant que première série modulaire et, de la même manière, un deuxième nombre choisi de deuxièmes profils (2) ou de profils de fin/de milieu de différentes longueurs en tant que deuxième série modulaire.

8. Système de cadre d'un tableau de distribution électrique conformément à l'une quelconque des revendications 1 à 7, **caractérisé en ce que** le système de cadre inclut une plaque de soutien en L (4) qui peut se fixer au deuxième profil (2) du socle et un profil vertical (6) adaptés en tant que système d'élément afin de rendre possible le positionnement dans la profondeur du profil de soutien vertical (6).

9. Système de cadre d'un tableau de distribution électrique conformément à la revendication 8, **caractérisé en ce que** le système inclut des isolateurs support (8) de différentes longueurs pour des barres omnibus de différentes capacités.

10. Système de cadre d'un tableau de distribution électrique conformément à l'une quelconque des revendications 1 à 9, **caractérisé en ce que** lesdits rebords d'extrémité (2.4) incluent deux séries alternatives de trous de fixation pour la fixation du deuxième profil (2) à la plaque latérale du premier profil (1) soit en tant que profil de fin, soit en tant que profil de milieu de sorte que la plaque d'extrémité (2.4) rassemble deux premiers profils adjacents (1).
